# EUROPEAN PATENT APPLICATION

(11) **EP 1 244 039 A1**
(43) Date of publication of application: **25.09.2002**
(21) Application number: 01949044.0
(22) Date of filing: 02.02.2001
(51) Int. Cl.: G06F 17/60, G06F 17/30, H04L 29/00

(54) **WEB PAGE PROVIDING METHOD AND SYSTEM FOR PROVIDING THE SAME**

(30) Priority: 02.02.2000 JP 2000025726
(71) Applicant: SEIKO EPSON CORPORATION, Tokyo 160-0811 (JP)
(72) Inventor: HAJI, Hisao c/o SEIKO EPSON CORPORATION, Suwa-Shi, Nagano 392-8502 (JP); GOTO, Eriko c/o SEIKO EPSON CORPORATION, Suwa-Shi, Nagano 392-8502 (JP); OSHIMA, Yasuhiro c/o SEIKO EPSON CORPORATION, Suwa-Shi, Nagano 392-8502 (JP); MARUYAMA, Takashi c/o SEIKO EPSON CORPORATION, Suwa-Shi, Nagano 392-8502 (JP)
(74) Representative: Sturt, Clifford Mark
(86) International application number: JP0100733
(87) International publication number: WO01057672

(57) **Abstract**

The user transmits a display request 11 to designate contents of a Web page from a receiving terminal 3. A sever 2 has a Web page generation processing section 6 that selects a display control program 8 and data necessary for the operation of the display control program 8 from a storage section 5, and adds the same to a standard format Web page 7 that is prepared in advance. A new Web page 10 designated by the user is transmitted to the receiving terminal 3 through a network 1. Accordingly, a Web page containing the most current and minimum data necessary can be provided to the user, the user can use the received Web page to calculate estimates for desired products and so on.

## Description

### TECHNICAL FIELED OF THE INVENTION

The present invention relates to a method for providing Web pages and a system for providing Web pages, in which Web pages are transmitted to receiving terminals through a network to thereby provide various services.

### PRIOR ART

Services that provide information and commercial transactions using networks such as the Internet have become increasingly popular. A server that transmits the information stores Web pages carrying a variety of information including a home page, which are provided to users. When the user accesses the home page, he may open necessary Web pages to access information to obtain the information. In a system that is used to conduct commercial transactions through the Internet, for example, receiving orders and selling products, the user may fill in order items in a form shown in the accessed Web page, and contents of the form are transmitted to a server-side. The server-side prepares products according to the order.

The conventional technique described above has the following problems that need to be solved. For example, in an Internet commerce system using the Internet, a variety of options may be provided to meet the preference of the users. In this case, the user views a target Web page and successively makes selections among the options. The server-side provides to the user a Web page including a form for selecting these options. When the user inputs selected information in the form and executes a transmission procedure, the selected information is transmitted to the server. The server calculates a quotation according to the selection, and displays the result on the Web page. Alternatively, an operator on the server side may directly telephone the user to report the result of the quotation.

However, in this case, the calculation of the quotation based on the selected information received from the user is entirely conducted on the server side. Therefore, when the server is accessed heavily at a time exceeding the processing capability of the server, responses to the requests for quotation calculation become slower and the users may have to wait for a long time. If a response to a request for quotation calculation is slow, the user may terminate the access.

Also, when there are many selection items, the same user may make many different kinds of requests for quotation calculations and the load to the server may further increase. Also, there is a problem of increased traffic on the network.

Furthermore, when prices of optional parts are frequently changed, Web pages that are prepared beforehand may have to be updated frequently . Otherwise, the prices displayed on a Web page may be used as reference prices and a correct quotation amount may have to be notified to the user when the user makes a request for quotations. This will further increase the number of requests for quotation, and a greater load may be applied to the server. On the other hand, in systems in which operators respond by telephone, human resources expenses may become substantial in order to provide proper services to many users.

### DESCRIPTION OF THE INVENTION

The present invention employs the following compositions to solve the problems described above.

### <Composition 1>

A method for providing a Web page having the features that a new Web page is generated that has a display control program and data needed to operate the display control program added to a standard format Web page that is prepared beforehand, said display control program having been selected according to a display request received from a receiving terminal, and the new page is transmitted to the receiving terminal through a network.

The standard format Web page is a Web page including necessary displays prepared for predetermined purposes. The display request is a request to display contents on a Web page that may be requested by a user or the like who uses the receiving terminal. The present invention has the feature that a Web page containing contents requested by the user is generated at the server each time a request is made and the same is transmitted to the receiving terminal. The display control program is a program capable of selecting data needed for a Web page and providing a display of it. The program is added to the Web page. In this manner, the user is restricted to a predetermined range of items to be displayed. As a result, the amount of data to be included in the Web page is reduced and the time required to display the Web page is displayed on the receiving terminal can be shortened.

### <Composition 2>

In the method for providing a Web page according to Composition 1, the method for providing a Web page has the features that the standard format Web page is used to display a quotation amount for a product by making a quotation calculation on the receiving terminal, and the required data is data including product information necessary for the quotation calculation.

To display products on the receiving terminal and to display a quotation of the products selected by the user upon a calculation of it, it is necessary to have product information for preparing the quotation. When the range of the products to be selected by the user is restricted, the amount of product information to be added to the Web page may be reduced. Therefore, in the present invention, necessary data that must be added to the Web page will be restricted in accordance with a display request by the user. As a result, it will be possible to substantially compress the amount of the data to be included in the Web page.

### <Composition 3>

A method for providing a Web page having the features that a new Web page is generated that has a display control program and data needed to operate the display control program added to a standard format Web page that is prepared beforehand, said display control program having been selected according to a capability of a receiving side, and the new page is transmitted to the receiving terminal through a network.

The capability of the receiving-side may be a display capability, a processing capability, or the like at a receiving terminal. When a Web page is generated with data and programs being added in an amount that can be comfortably displayed and operated on the receiving terminal and transmitted, the user can comfortably use the Web page.

### <Composition 4>

In the method for providing a Web page according to Composition 3, the method for providing a Web page has the feature that the server is notified by the user of the capability of the receiving side .

The capability of the receiver side may be stored in a database of the server side in advance. However, if the user notifies its receiving capability, the server can generate a Web page having contents appropriate to the capability without referring to the database or the like.

### <Composition 5>

A method for providing a Web page having the features that a new Web page is generated that has a display control program and data needed to operate the display control program added to a standard format Web page that is prepared beforehand, said display control program having been selected according to a display format of a receiving side, and the new page is transmitted to the receiving terminal through a network.

When a browser of a receiving terminal has a special function, or the display screen has a special layout, such as the one provided on a mobile terminal or a cellular phone terminal in which a Web page is displayed in a special layout, the server-side may recognize the same and generate a suitable Web page. Such a display format may be automatically recognized, for example, by the server based on the telephone number of the receiving terminal, or may be recognized upon reception by the server of a notice from the receiving terminal.

### <Composition 6>

A method for providing a Web page having the features that a new Web page is generated that has a display control program and data needed to operate the display control program added to a standard format Web page that is prepared beforehand, said display control program having been selected according to traffic on a network, and the new page is transmitted to the receiving terminal through the network.

When the data size of a Web page that is transmitted from the server to a receiving terminal is adjusted according to the traffic on the network, the time needed to display the Web page on the receiving terminal side can be adjusted within an appropriate range. The traffic on the network includes all of the loads on the hardware or software included in the network, the interface between the network and the server, and the interface between the receiving terminal and the network. The traffic on the network can be detected by an actual data communication time between the server and a receiving terminal, or may be detected based on information sent from a communication device such as a router or the like.

### <Composition 7>

A method for providing a Web page having the features that a new Web page is generated that has a display control program and data needed to operate the display control program added to a standard format Web page that is prepared beforehand, said display control program having been selected according to a selection condition corresponding to a capability of a network, and the new page is transmitted to the receiving terminal through the network.

The capabilities of the network include the communication capability that is determined by the hardware used for the network and the software that controls the network. When a receiving terminal is connected to the network for high-speed data communication, it is preferable to increase the size of data for a Web page. On the other hand, when a low speed data communication network such as telephone lines is used, it is preferable that the size of data for a Web page is made relatively small.

### <Composition 8>

A method for providing a Web page having the feature that a new Web page is generated that has a display control program and data needed to operate the display control program added to a standard format Web page that is prepared beforehand, said display control program having been selected according to a selection condition corresponding to a load on a server, and the new page is transmitted to the receiving terminal through the network.

When the server provides a Web page to many receiving terminals, or it is executing other complex operation processes, the server may adjust by itself the size of data for the Web page that is transmitted to the receiving terminals within its own capability. The load on the server includes an operation-processing load on the server and a communication-processing load on the server.

### <Composition 9>

A method for providing a Web page having the features that a new Web page is generated that has a display control program and data needed to operate the display control program added to a standard format Web page that is prepared beforehand to display a quotation amount for products, said display control program having been selected according to a display request received from a receiving terminal and a capability of the receiving side, said data including product information for calculating the quotation amount, and the new page is transmitted to the receiving terminal through a network.

The above provides a method having the features of Composition 2 and Composition 3.

### <Composition 10>

A method for providing a Web page having the features that a new Web page is generated that has a display control program and data needed to operate the display control program added to a standard format Web page that is prepared beforehand to display a quotation amount for a product, said display control program having been selected according to a display request received from a receiving terminal and a display format of the receiving-side, said data including product information for calculating the quotation amount, and the new page is transmitted to the receiving terminal through a network.

The above provides a method having the features of Composition 2 and Composition 5.

### <Composition 11>

A method for providing a Web page having the features that a new Web page is generated that has a display control program and data needed to operate the display control program added to a standard format Web page that is prepared beforehand to display a quotation amount for a product, said display control program having been selected according to a display request received from a receiving terminal and traffic on a network, said data including product information for calculating the quotation amount, and the new page is transmitted to the receiving terminal through the network.

The above provides a method having the features of Composition 2 and Composition 6.

### <Composition 12>

A method for providing a Web page having the features that a new Web page is generated that has a display control program and data needed to operate the display control program added to a standard format Web page that is prepared beforehand to display a quotation amount for a product, said display control program having been selected according to a display request received from a receiving terminal and a capability of a network, said data including product information for calculating the quotation amount, and the new page is transmitted to the receiving terminal through the network.

The above provides a method having the features of Composition 2 and Composition 7.

### <Composition 13>

A method for providing a Web page having the features that a new Web page is generated that has a display control program and data needed to operate the display control program added to a standard format Web page that is prepared beforehand to display a quotation amount for a product, said display control program having been selected according to a display request received from a receiving terminal and a load on a server, said data including product information for calculating the quotation amount, and the new page is transmitted to the receiving terminal through the network.

The above provides a method having the features of Composition 2 and Composition 8. Also, in accordance with any one of Composition 1 through Composition 13, the display control program and the size of data required to operate the display control program may be adjusted so that data for the new Web page can be transmitted within a predetermined period of time (for example, within ten seconds).

### <Composition 14>

A Web page providing system having the features that the system comprises a Web page generation processing section that selects a display control program and data needed to operate the display control program according to a predetermined condition from a database, and adds the same to a standard format Web page that is prepared beforehand to generate a new Web page; and a communication section that transmits the generated new Web page through a network to a receiving terminal.

The above provides a system suitable for carrying out the inventions described above.

### <Composition 15>

A computer readable storage medium having the features that the medium stores a program that executes a process of selecting a display control program and data needed to operate the display control program according to a predetermined condition from a database, and adding the same to a standard format Web page that is prepared beforehand to generate a new Web page, and a process of transmitting the generated new Web page through a network to a receiving terminal.

The above provides a recording medium that stores a program for operating a server.

### BRIEF DESCRIPTION OF THE DRAWINGS

Fig. 1 shows a block diagram of a Web page providing system in accordance with the present invention.
Fig. 2 shows illustrations that describes exemplary structures of Web pages, in which Fig. 2 (a) shows a main portion of a page for model selection, and Fig. 2 (b) shows a main portion of a page for quotation.
Fig. 3 shows a flowchart of the operation at the server-side after the model has been selected on the page for model selection 12.
Fig. 4 shows a flowchart that describes an operation of a new Web page that is transmitted from the server to a receiving terminal when the user operates the Web page.

### EMBODIMENTS OF THE PRESENT INVENTION

Embodiments of the present invention are described below with reference to specific examples.

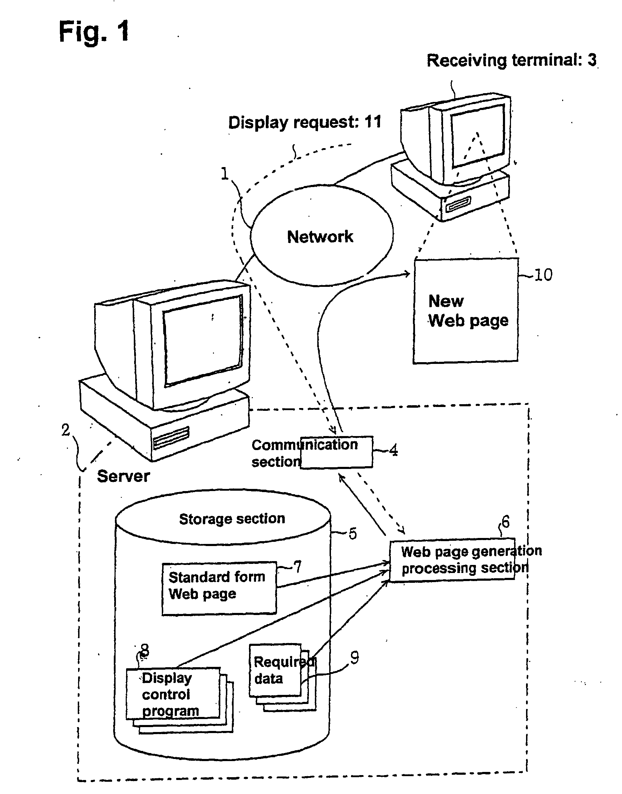

Fig. 1 shows a block diagram of a Web page providing system in accordance with the present invention. In the system shown in the figure, a server 2 provides direct-selling services for personal computers, for example, through a network 1 such as the Internet. A receiving terminal 3 is a terminal of the user who receives information to use such services through the network 1.

The server is equipped with a communication section 4, a storage section 5, and a Web page generation processing section 6. The storage section 5 stores a standard format Web page 7, a display control program 8 and necessary data 9, which are described below.

The storage section 5 is formed of, for example, a hard disk or the like. The communication section 4 has a section having a function to perform communication control such as transmitting Web pages to the network 1 or receiving data from the network 1. The communication section 4 may be formed of, for example, a well-known modem or a communication control program.

The Web page generation processing section 6 selects a display control program 8 and data 9 that is needed to operate the display control program stored in the storage section 5 according to predetermined conditions, and adds the same to a standard format Web page 7 stored in the storage section 5 to generate a new Web page 10. The Web page generation processing section 6 may be formed of a computer program or the like to execute processes that will be described later.

In addition, the storage section 5 in the figure stores a home page (not shown) to be provided to the users and a variety of Web pages. The present system can provide a Web page each time the Web page generation processing section 6 generates a new one, in addition to Web pages that are stored in advance in the storage section 5. New Web pages to be provided to the users may contain any content and may be used for any purpose. A new Web page 10 in this example has content for calculating a quotation for a personal computer.

Each time necessary data 9 is selected, a new Web page 10 that is to be provided to the user is generated according to a display request 11 received from the receiving terminal 3 that is operated by the user. It is not economical if a variety of Web pages are prepared on the server side in order to accommodate a variety of requests by the users. For example, such a system cannot respond in real time to changes in conditions such as changes in prices of products. In other words, if data such as price information is centrally managed in the database, the present invention allows the user to obtain the most current data of information that is centrally managed in the database and allows the obtained data to be displayed within a new Web page, in response to the user's display request.

The display request by the user may contain any content. Also, sufficient information desired by the user through the display request can be included in a Web page and displayed. Furthermore, by the display request, only necessary information is selected from the huge database and a new Web page is edited, thus the size of data for a Web page can be adjusted to an appropriate size. For example in the case of a calculation of a quotation for a personal computer, a model name of the personal computer and an operating system, for example, are selected by the user. Data such as types of parts and prices thereof which are necessary for the quotation within a given range is included in the new Web page. In other words, the display control program 8 for displaying options for computers corresponding to the model into which the corresponding operating system will be installed and prices thereof, and performing calculations of the quotation therefor and the data 9 needed for the display are added to the standard format Web page 7; and the Web page 7 is transmitted to the receiving terminal 3. Accordingly, the user receives the Web page that has been optimized to a minimum data size, and selects options of his own preference such that the Web page can calculate quotations of purchase prices of the personal computer.

The standard format Web page 7 is a Web page to be used as a so-called template, and it may be in any format. Several types of standard format Web pages 7 may be prepared in advance, and any one of them may be selected. In the case of a very simple content, the program may directly generate a Web page without using a template. In this case, the Web page generation processing section 6 retains the standard format Web page 7.

The new Web page 10 that is provided to the receiving terminal 3 through the network 1 is displayed by a standard browser without being restricted by the type of the receiving terminal 3 or the operating system. Furthermore, the new Web page 10 may incorporate programs having a display control function, a simple calculation function and the like written in, for example, JavaScript (an object oriented script language developed by Netscape). They are also interpreted by the browser, and therefore not restricted by the type of the receiving terminal 3 or the operating system.

The present invention utilizes the features of the Web page described above. The Web page generation processing section 6 has a function to add a display control program 8 and data 9 necessary for the operation of the display control program 8 to the standard format Web page 7. The display control program 8 is a program that executes the process of automatically switching display contents on the Web page upon operation by the user. In accordance with the present invention, the display control program 8 can alleviate the load that may be generated if the server would perform a quotation calculation each time when the user makes a request.

The necessary data 9 is data that is needed to control the display. For example, when there are ten different product options to be selected, the necessary data 9 includes product names and unit prices for all of the ten different types. The necessary data 9 may be prepared independently of the display control program 8, or may be incorporated integrally into the display control program 8. When there are a large number of combinations of product options, which makes the data size of the necessary data 9 excessively large, the load for transmitting a new Web page to a receiving terminal becomes large. Therefore, a display request by the user may preferably be presented in a manner that can optimize the data size.

The new Web page 10 thus generated is transmitted to the receiving terminal 3 through the network 1. The network 1 may preferably be the Internet. In addition, the present invention can be implemented by using any other types of networks such as telephone networks and Intranet.

More specific examples of the present invention are described below with reference to the accompanying drawings.

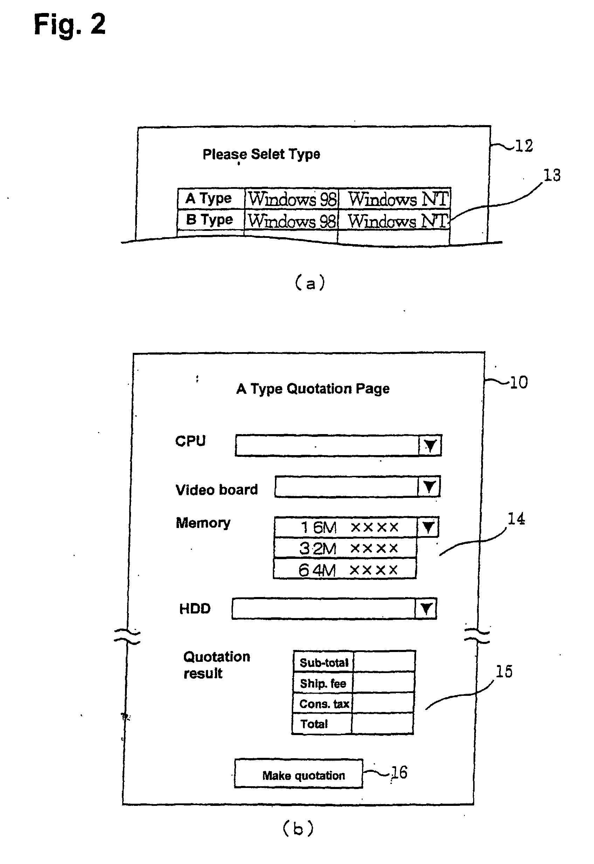

Fig. 2 shows illustrations that describes exemplary structures of Web pages, in which Fig. 2 (a) shows a main portion of a page for model selection, and Fig. 2 (b) shows a main portion of a page for quotation.

When a quotation for a personal computer is requested, first, the user opens a page for model selection shown in Fig. 2 (a). Using a selection list 13 on this page, the user selects, for example, A type personal computer having an operating system, either Windows 98 or Windows NT (products by Microsoft). The selection result is transmitted to the server 2 through the network 1 as a display request 11 shown in Fig. 1. The communication section 4 receives the same.

The Web page generation processing section 6 of the server generates a new Web page 10 shown in Fig. 2 (b) and transmits the same to the receiving terminal 3. The new Web page 10 provides functions to select options for the A type personal computer with the Windows 98 operating system installed and to calculate a quotation of a purchase price thereof. For example, by a selection list 14 displayed on this Web page, the capacity of a RAM (random access memory) to be installed and its manufacturer may be selected. Portions indicated by "xxxx" may display names of manufacturers or the like, and the user can select a manufacturer of his preference. When the parts are selected, a quotation of the selected parts is simultaneously calculated and the quotation result 15 is displayed. Upon completion of selection of the parts, the user clicks a quotation-preparation button 16 to make a formal request for quotation to the server.

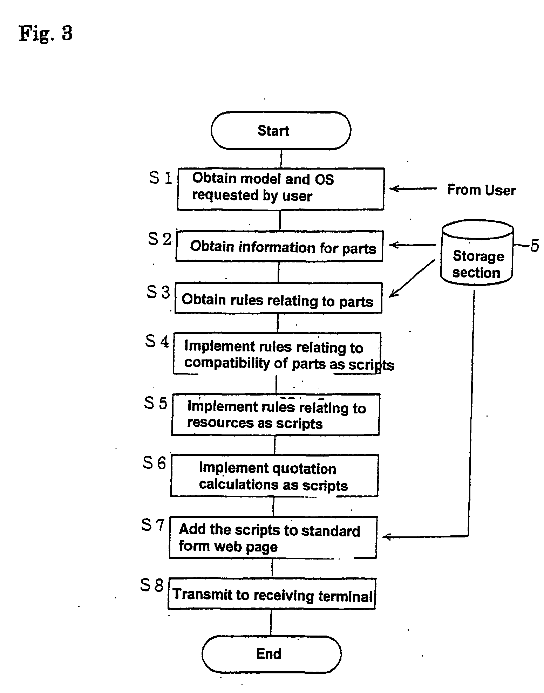

Fig. 3 shows a flowchart of the operation at the server-side after the model has been selected on the page for model selection 12.

First, the server 2 obtains information relating to the model and the operating system (OS) that are requested by the user in step S1. Next, the Web page generation processing section 6 starts obtaining a standard format Web page 7 and data 9 that must be added to the Web page 7 from the storage section 5 shown in Fig. 1. In step S2, information about parts is obtained. The information about parts includes names of products, prices of products, product codes and the like. Based on the names of the parts in the information about parts, the selection list 14 shown in Fig. 2(b) is generated. Prices of the parts are displayed on the Web page. Product codes or data for shipping fees are not displayed on the Web page. These data are described in the source code of the Web page. In step S3, rules relating to the parts are obtained. Contents of the rules are described with reference to the following steps S4 and S5.

In step S4, rules relating to compatibility of the parts are implemented as a script. The rules relating to compatibility of the parts may dictate that, for example, a part A and a part B cannot be used at the same time, a part D is necessary to use a part C, and the like. By including such rules in a Web page, the Web page alone can provide an environment similar to the one in which the user receives appropriate advice from a specialist and places an order for a personal computer having specifications of his own preference.

In step S5, rules relating to the resources are implemented as a script. The rules relating to the resources may dictate that, for example, when two empty slots are provided for installing optional cards in a personal computer, three cards cannot be installed; or that adding a card to a target computer will cause a shortage of IRQs and the like. When these rules are included in a Web page, errors in selecting options by the user can be prevented, in a manner similar to the way that compatibility issues are treated.

Lastly in step S6, calculation formulas to calculate quotations when the parts described above are selected are implemented as a script.

As described above with reference to Fig. 2 (b), when the parts are selected, the resulting quotation is simultaneously displayed. Therefore, the user can compare his budget to the prices ofa variety of combinations of parts. Furthermore, since the calculations are performed in real time, the user who is using the receiving terminal does not have to wait for a long time for the calculation.

Also, if a program that displays a warning message for an inappropriate combination of parts is included in the calculation program, its use will be very much easier. Furthermore, since the server does not perform calculations, the server is effectively freed from the load. In other words, if the server-side were to perform all the calculations in real time for trial quotations by many users who are connected to the network, the server would require a high calculation capability and a communication processing capability, which results in higher facility installation costs at the server side.

If the server were to perform the calculations for quotations in a batch in order to avoid the problems, the timing for notifying results of the calculations for quotations to the users delays, which does not best serve for the users. Also, it is noted that calculations of quotations on the receiving terminals 3 can be performed off line. Therefore, when the user is in a dial-up connection, the connection may be once terminated; and when a desired configuration of a computer is decided, the connection may be re-established, and a formal quotation request can be made. In this manner, the user can have sufficient time to consider and can cut down the communication costs.

In step S7, the above-described scripts are added to the standard format Web page 7 to complete the new Web page. It goes without saying that the processes in the above-described steps S2 through step S7 can be conducted in any orders, the scripts may be generated while obtaining information about parts, or new Web pages can be generated successively while scripts are generated.

Lastly, in step S8, the new Web page just generated is transmitted to the receiving terminal 3. The processes in step S1 through step S8 shown in the figure are completed in a very short time upon receiving the display request 11 from the user.

Therefore, new Web pages that are generated by referring to the latest database are constantly provided to the users, and changes in the prices can be reflected in real time.

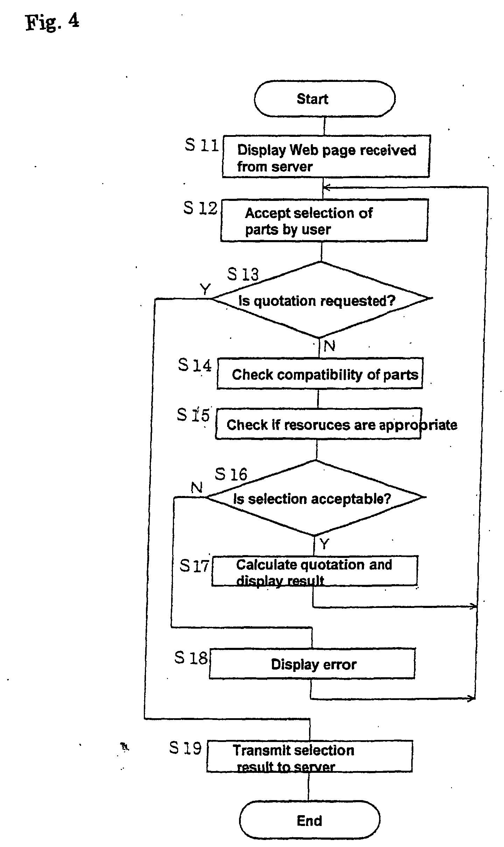

Fig. 4 shows a flowchart to describe an operation of a new Web page that is transmitted from the server to the receiving terminal when the user operates the new Web page.

As described above, When the new Web Page 10 shown in Fig. 2(b) is received by the receiving terminal 3 and the user operates the list 14 or the like to select parts, the scripts added to the new Web Page 10 are executed, and automatically perform calculations for quotations. More specifically, by the following processes, the receiving terminal 3 automatically and promptly perform calculations of quotations for combinations of many selectable parts without imposing a load on the server 3 at all.

First, in step S11, the receiving terminal 3 displays the new Web page 10 that is received from the server 2. Fig. 2 (b) shows the content thereof. In step S12, selection of parts by the user is received. The user uses the selection list shown in Fig. 2 (b) to select parts of his preference. Step S13 is a process to make a determination whether or not the quotation-preparation button 16 shown in Fig. 2 (b) is clicked.

When the quotation-preparation button 16 has not been clicked, the script for checking compatibility of the parts is executed in step S14. In step S15, the script for checking compatibility of the resources is executed. Then, based on the results of processing the scripts in steps S14 and S15, a general determination is made in step S16 whether or not the selection of the parts is appropriate. When the selection of the parts is appropriate, the script for quotation calculation operates in step S17, and its result is immediately displayed in the section of the quotation result 15 of Fig. 2 (b).

When the selection of the parts is not appropriate, an error display is made in step S18, and the user is requested to start over selection of parts again.

After repeating the processes from step S12 to step S18, and the user completes the selection of all the necessary parts, the user clicks the quotation-preparation button 16 shown in Fig. 2 (b). Then, the selection result is transmitted to the server in step S19. The sever reads the part codes and the like included in the selection result that is received from the receiving terminal, makes a formal quotation and transmits the result to the receiving terminal.

It is noted that, in the above-described example, a Web page is generated according to a predetermined display request, which the server received from the receiving terminal. Accordingly, the Web page with its content and size optimized by the selection of the user on the receiving terminal can be transmitted. Besides the above, the capability of receiving terminals may become problems. For example, the data size for a Web page that can be comfortably received and viewed is different between a receiving terminal that is connected to a large capacity high-speed communication line and a receiving terminal that is connected to a small capacity low-speed communication line.

If it can be determined whether the type of communication line at the receiving terminal side is, for example, either a normal telephone line, an ISDN (integrated services digital network) line, or a LAN (local area network) that is connected through a cable modem, then a Web page having a data size appropriate to the type of the communication line can be transmitted.

In this connection, for example, a form to inquire about the capability of the receiving terminal side may be included in a menu screen of a Web page that is initially transmitted to the receiving terminal.

The capability of the receiving terminal side may be determined by its network environment such as a communication line speed, and also various other properties including an operation processing speed and a memory capacity of the receiving terminal and the like. Therefore, the content of a Web page to be generated may be selected depending on these properties. For example, when the network environment is extremely poor, a Web page with a minimum image data may be transmitted. In this case, a data size in which its transmission can be completed within ten seconds may be selected, and a Web page having the data size may be generated.

In any of the above cases, if the user initially selects an operating system running on his personal computer, such as, for example, Windows 95, Windows 98 or Windows NT, and a Web page for calculating quotation may be generated depending on the selection and transmitted, then the size of the Web page becomes about one-third of a Web page created without designating an operating system. As a result, the time for transmitting a Web page can be shortened.

In the "i-mode" service provided by NTT Mobile Communication Network Corp., Web pages can be viewed by a hand held terminal.

However, display of a Web page received by a hand held terminal of this type is controlled by a special browser. When a Web page is transmitted to the hand held terminal of this type, it is preferable that the Web page be formed in a layout appropriate to the display format of the browser, and that the memory capacity at the receiving-side and the like of the receiving side be optimized .

Also, for example, when a cellular phone is connected to a hand carry type personal computer, its data transmission speed differs depending on whether the cellular phone is a digital system or an analogue system. In this case, the data size of a Web page can be selected in view of the system structure on the receiving side.

Furthermore, according to the present invention, the data size of a Web page can be optimized according to the traffic on the network. For example, in cases where traffic on the network connected to the server increases, and it takes a long time to transmit a Web page of a large size, the data size of a Web page to be generated will be minimized. In this manner, the size of data for a Web page is dynamically changed to suit the convenience of the users who access the Web page.

In a similar manner, the size of data for a Web page can be optimized according to the load on the server. For example, when the server is accessed by users heavily at a time, causing the server to be highly loaded, the size of data for a Web page can be reduced to alleviate the load in generating and processing a Web page and the load in transmitting the Web page.

Also, the display request from the receiving terminal, the capability of the receiving terminal side, the traffic on the network, the load on the server and the like may be appropriately combined to make parameters for generating Web pages, whereby the size of data for a Web page to be generated can be optimized.

The present invention can be widely utilized not only in the system for selling products described above, but also in other services using networks, for example, sightseeing travel plans provided by travel agencies. In the case of an overseas travel plan, for example, the number of plans to be presented to the user can be reduced by around 20-30%, if destinations and the number of days to stay are designated rather than just specifying destinations. Therefore, the time for transmitting a new Web page can be shortened.

It is noted that the functional blocks shown in Fig. 1 may be formed of individual program modules, or may be formed of an integrated program module. Also, all of the functional blocks or a part thereof may be formed from hardware with logic circuits. Also, each of the program modules may be incorporated into an existing application program or may be operated as an independent program.

A computer program that realizes the invention described above may be stored in a computer readable storage medium, such as CD-ROM, and can be installed for the use. Also, the computer program can be downloaded onto a computer memory through the network for the use.

## Claims

1. A method for providing a Web page, comprising:
generating a new Web page that has a display control program and data needed to operate the display control program added to a standard format Web page that is prepared beforehand, said display control program having been selected according to a display request received from a receiving terminal; and
transmitting the new Web page to the receiving terminal through a network.

2. A method for providing a Web page according to claim 1, wherein the standard format Web page is used to display a quotation amount for a product by making a quotation calculation on the receiving terminal, and the necessary data is data including product information needed for said quotation calculation.

3. A method for providing a Web page, comprising:
generating a new Web page that has a display control program and data needed to operate the display control program added to a standard format Web page that is prepared beforehand, said display control program having been selected according to a capability of a receiving side: and
transmitting the new Web page to the receiving terminal through a network.

4. A method for providing a Web page according to claim 3, wherein the server is informed by the user of the capability of the receiving side .

5. A method for providing a Web page, comprising:
generating a new Web page that has a display control program and data needed to operate the display control program added to a standard format Web page that is prepared beforehand, said display control program having been selected according to a display format at a receiving side: and
transmitting the new Web page to the receiving terminal through a network.

6. A method for providing a Web page, comprising:
generating a new Web page that has a display control program and data needed to operate the display control program added to a standard format Web page that is prepared beforehand, said display control program having been selected according to traffic on a network; and
transmitting the new Web page to the receiving terminal through the network.

7. A method for providing a Web page, comprising:
generating a new Web page that has a display control program and data needed to operate the display control program added to a standard format Web page that is prepared beforehand, said display control program having been selected according to a selection condition corresponding to a capability of a network; and
transmitting the new Web page to the receiving terminal through the network.

8. A method for providing a Web page, comprising:
generating a new Web page that has a display control program and data needed to operate the display control program added to a standard format Web page that is prepared beforehand, said display control having been selected according to a selection condition corresponding to a load on a server; and
transmitting the new Web page to the receiving terminal through the network.

9. A method for providing a Web page, comprising:
generating a new Web page that has a display control program and data that is needed to operate the display control program added to a standard format Web page that is prepared beforehand to display a quotation amount for a product, said display control program having been selected according to a display request received from a receiving terminal and a capability of the receiving side, said data including product information for calculating the quotation amount; and
transmitting the new page to the receiving terminal through a network.

10. A method for providing a Web page, comprising:
generating a new Web page that has a display control program and data that is needed to operate the display control program added to a standard format Web page that is prepared beforehand to display a quotation amount for a product, said display control program having been selected according to a display request received from a receiving terminal and a display format of the receiving side, said data including product information for calculating the quotation amount; and
transmitting the new page to the receiving terminal through a network.

11. A method for providing a Web page, comprising:
generating a new Web page that has a display control program and data that is needed to operate the display control program added to a standard format Web page that is prepared beforehand to display a quotation amount for a product, said display control program having been selected according to a display request received from a receiving terminal and traffic on a network, said data including product information for calculating the quotation amount; and
transmitting the new page to the receiving terminal through the network.

12. A method for providing a Web page, comprising:
generating a new Web page that has a display control program and data that is needed to operate the display control program added to a standard format Web page that is prepared beforehand to display a quotation amount for a product, said display control program having been selected according to a display request received from a receiving terminal and a capability of a network, said data including product information for calculating the quotation amount; and
transmitting the new page to the receiving terminal through the network.

13. A method for providing a Web page, comprising:
generating a new Web page that has a display control program and data that is needed to operate the display control program added to a standard format Web page that is prepared beforehand to display a quotation amount for a product, said display control program having been selected according to a display request received from a receiving terminal and a load on a server, said data including product information for calculating the quotation amount; and
transmitting the new page to the receiving terminal through the network.

14. A Web page providing system comprising:
a Web page generation processing section that selects a display control program and data needed to operate the display control program according to a predetermined condition from a database, and adds the same to a standard format Web page that is prepared beforehand to generate a new Web page;
and a communication section that transmits the generated new Web page through a network to a receiving terminal.

15. A computer readable storage medium storing a program that executes:
a process of selecting a display control program and data needed to operate the display control program according to a predetermined condition from a database, and adding the same to a standard format Web page that is prepared beforehand to generate a new Web page; and
a process of transmitting the generated new Web page through a network to a receiving terminal.
